(19) Europäisches Patentamt
European Patent Office
Office européen des brevets

(11) Publication number : **0 367 529 B1**

# (12) EUROPEAN PATENT SPECIFICATION

(45) Date of publication of patent specification :
**22.01.92 Bulletin 92/04**

(51) Int. Cl.⁵ : **A01F 15/08**

(21) Application number : **89311171.6**

(22) Date of filing : **30.10.89**

(54) **An automatic round bale wrapper.**

(30) Priority : **31.10.88 NO 884841**

(43) Date of publication of application :
**09.05.90 Bulletin 90/19**

(45) Publication of the grant of the patent :
**22.01.92 Bulletin 92/04**

(84) Designated Contracting States :
**DE FR GB IT SE**

(56) References cited :
**EP-A- 0 234 763**
**WO-A-88/03896**
**FR-A- 2 622 866**
**GB-A- 2 193 683**
**US-A- 4 432 185**

(73) Proprietor : **KVERNELAND UNDERHAUG A/S**
**P.O. Box 70**
**N-4350 Naerbo (NO)**

(72) Inventor : **Haugstad, Jahn E.**
**N-4362 Vigrestad (NO)**

(74) Representative : **Orr, William McLean**
**URQUHART-DYKES & LORD 5th Floor, Tower**
**House Merrion Way**
**Leeds West Yorkshire, LS2 8PA (GB)**

## Description

This invention relates to a bale wrapper apparatus for applying a stretchable plastics film wrapping around a cylindrical bale of agricultural crop material, and is especially concerned with the wrapping of crop material to form silage.

In agriculture, the treatment of green forage, e.g. grass, wrapped in cylindrical bales is becoming more and more common, as compared to the previous practice of ensilage in traditional silage towers. The wrapping of cylindrical bales of grass in substantially airtight and watertight manner by means of a prestretched plastics film enables the grass to ferment to form silage over a period of time. This is known as "round bale ensilage", and enables wrapped bales to be stored outdoors, and has advantageous environmental aspects over the use of silage towers, in that discharge of silage effluent is substantially avoided, and the use of chemicals can be drastically reduced.

It is known from EP-A-0208034 and WO-A-8803896 to provide a bale wrapper apparatus for wrapping cylindrical or "round" bales with plastics film, and which comprises a chassis, a turntable which is rotatably mounted on the chassis for rotation about a substantially vertical axis and which has a pair of laterally spaced rollers arranged to receive a bale and operable to rotate the bale about the substantially horizontal axis simultaneously with the rotation of the turntable about its substantially vertical axis, a fixed mounting on the chassis which is spaced from the turntable and which serves to mount a dispenser reel of stretchable plastics film from which a film web can be withdrawn in order to apply wrapping around the bale when the bale is rotated about its horizontal axis and the turntable is rotated about its vertical axis, and means for tilting the turntable about a substantially horizontal axis from a substantially horizontal bale wrapping position to a tilted position in order to discharge the wrapped bale from the turntable.

A disadvantage of the known rotating turntable type of bale wrapper apparatus is that, each time wrapping of a bale has been completed, it has been necessary for an operator to carry out the following sequence of operations ; (i) to step down from a usual traction vehicle used to operate the bale wrapper apparatus e.g. a tractor ; (ii) to cut the length of film extending between the wrapped bale and the film dispenser reel ; (iii) to apply one cut end of the film (trailing from the bale) to the wrapped bale ; and then (iv) to apply the other cut end of the film (leading from the reel) to a newly positioned bale on the turntable, before a further wrapping operation can take place. All of these operations on the film have to take place manually, and then the operator has to return to his position on the tractor before a fresh cycle of operations can commence.

The present invention therefore seeks to provide an improved bale wrapper apparatus of the rotating turntable type, in which the above described manual operations on the film can be carried out automatically by the apparatus, thereby making it possible to carry out a higher rate of production of wrapped bales.

It is also known from EP-A-0234763 to provide a bale wrapper apparatus of the orbiting type i.e. in which a film reel is caused to orbit around a cylindrical bale while the bale is rotated about its substantially horizontal axis by a pair of laterally spaced rollers on which the bale is supported. In this type of bale wrapper apparatus, the only rotation applied to the bale is rotation about its axis, and therefore the apparatus does not have a rotating turntable. The wrapping of the cylindrical bale is therefore accomplished by simultaneous rotation of the bale about its axis, accompanied by orbital movement of a film dispenser reel in a substantially horizontal plane around the bale and about a substantially vertical axis

The bale wrapper apparatus disclosed in this reference is provided with an automatically operating clamping and cutting means which is operated automatically once the wrapping of the bale has been completed. This clamping and cutting means clamps the wrapping film at a position between the film dispenser reel and the wrapped bale, and then cuts through the film thereby allowing the wrapped bale to be discharged from the apparatus. In one arrangement, the wrapped bale is discharged by tiling of the entire bale wrapper apparatus so that the wrapped bale can be discharged under gravity. In a further arrangement, the wrapped bale can be discharged by moving the support rollers laterally apart from each other relatively, thereby releasing the bale and allowing the rollers to be withdrawn from engagement with the bale, which remains resting on the ground.

However, the present invention is, as mentioned above, concerned exclusively with a rotating turntable type of bale wrapper apparatus, and which provides automatic operation of the apparatus to clamp and to cut the film at the end of each bale wrapping operation, which has not hitherto been possible with previously known designs of rotating turntable types of bale wrapper apparatus, in which the turntable has to pivot upwardly in order to discharge the wrapped bale. The invention therefore provides a novel solution to the problem of providing an automatically operating clamping and cutting means of a rotating turntable type of bale wrapper apparatus, in which the turntable has to pivot upwardly to discharge the wrapped bale.

The invention therefore provides a rotating turntable type bale apparatus which is characterised in that a film web clamping and cutting means is arranged along the path of travel of the web from the reel to the bale and is engageable with the web during tilting of the turntable to the discharge position, in order to gather the web into a gathered web portion, and in that means is provided to initiate the operation of the clamping and cutting means at a predetermined time or tilting angle during the tilting movement of the turntable, in order that the clamping and cutting means can cut the gathered film web portion between the reel and the wrapped bale and also can hold the cut end of the web, so that the wrapped bale can then be discharged from the turntable.

Preferably, the clamping and cutting means comprises a support on which the gathered portion of the web is formed, and a cutting tool for cutting the gathered portion, said support and said cutting tool being movable relative to each other in order that the film cutting operation can be carried out.

The cutting tool may be fixed to the turntable, and the support may move towards the cutting tool and has a film stopper which can move the gathered web portion into engagement with the cutting tool.

In a further arrangement, the cutting and clamping means comprises a resilient friction roller and a friction pad which are movable relative to each other in order to clamp the gathered web portion, prior to cutting of the gathered web portion.

It is further preferred that the cutting and clamping means includes an abutment against which the gathered web portion is pressed by the film stopper in order to clamp the gathered web portion, prior to cutting of the film by the cutting tool. The abutment may move with the film stopper against spring force through a predetermined distance when the film stopper moves towards the cutting tool.

The initiation of the operation of the cutting and clamping means is preferably provided by a trigger mechanism which is connected to the chassis. A winding mechanism may be provided which can apply pre-tension to the clamping and cutting means against spring force, prior to the next operation of the trigger mechanism.

Preferably, the winding mechanism is arranged to apply step-wise pre-tensioning of the clamping and cutting means with each revolution of the turntable.

It is further preferred that the winding mechanism is arranged to permit release of the cut and gathered film web portion by the cutting and clamping means, at the earliest after the first pre-tensioning step carried out by the winding mechanism.

Embodiments of bale wrapper apparatus according to the invention will now be described in detail, by way of example only, with reference to the accompanying drawings, in which :

Figure 1 is a simplified perspective view of a rotating turntable type of bale wrapper apparatus ;

Figure 2 shows the apparatus of Figure 1 with the turntable in a tilted position in which operation of a clamping and cutting means of the apparatus is commencing ;

Figure 3 is a perspective illustration of one detailed embodiment of clamping and cutting means for use with the apparatus ;

Figure 4 is an end view showing a trigger mechanism for use in triggering the operation of the clamping and cutting means ;

Figure 5 is a diagrammatic plan view showing the operation of the clamping and cutting means of Figure 3 in more detail ; and,

Figure 6 is a plan view, similar to Figure 5, of a further embodiment of clamping and cutting means for use with the apparatus.

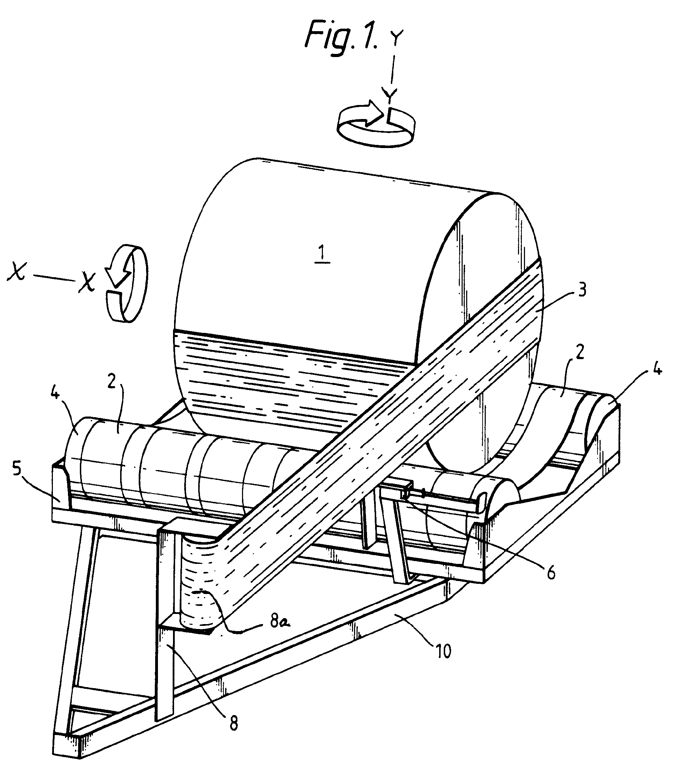

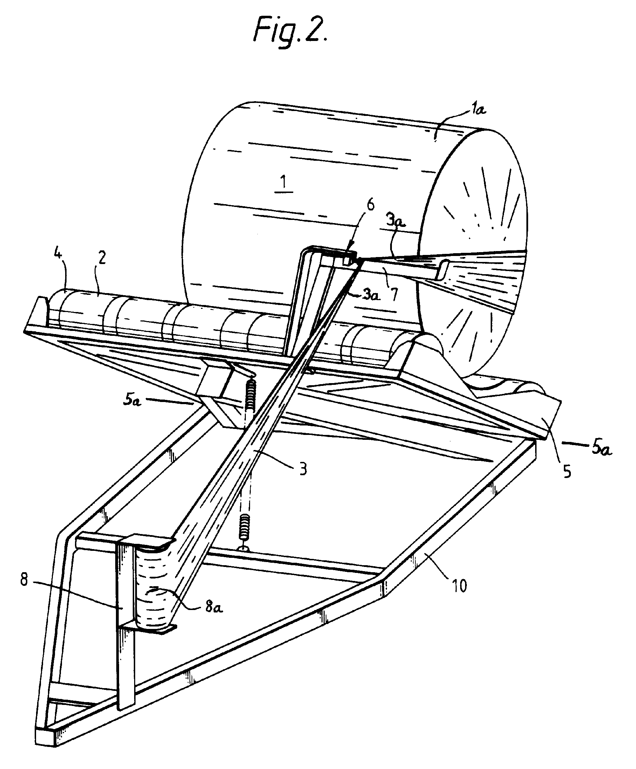

Referring first to Figure 1 of the drawings, this shows a rotatable turntable type of bale wrapper apparatus which comprises a chassis 10, a turntable 5 which is rotatably mounted on the chassis 10 for rotation about a substantially vertical axis Y-Y and which has a pair of laterally spaced rollers 4 arranged to receive a bale and operable to rotate the bale about the substantially horizontal axis X-X simultaneously with the rotation of the turntable 5 about its axis Y-Y. A fixed mounting 8 on the chassis 10 is spaced from the turntable 5 and serves to mount a dispenser reel 8a of stretchable plastics film from which a film web 3 can be withdrawn in order to apply wrapping around the bale 1 when the latter is rotated about its axis X-X and when the turntable 5 is rotated about its axis Y-Y. Means (not shown in detail) is provided to tilt the turntable 5 about a substantially horizontal axis 5a, from a substantially horizontal bale-wrapping position to a tilted position in order to discharge a wrapped bale 1a from the turntable 5, as shown in Figure 2.

The chassis 10 may be connected with a traction vehicle (not shown) e.g. an agricultural tractor or the like. The apparatus may be of a kind which can be firmly mounted on the driving vehicle, or it may be provided with wheels to be towed behind the driving vehicle. Alternatively, the apparatus may comprise a stationary bale wrapper apparatus.

The turntable 5 can be tilted relative to chassis 10 between the horizontal bale wrapping position shown in Figure 1, to an inclined discharge position shown in Figure 2, by operation of a working cylinder (not shown) or the like.

The rollers 4 are laterally spaced apart from each other, and one or a number of slack belts 2 are taken over the rollers and serve to receive the bale 1. One of the rollers 4 is supplied with a driving force which is transmitted via the belts 2 to the bale 1 which is then caused to rotate about horizontal axis X-X. By suitable control over the rotation of turntable 5 about axis Y-Y in conjunction with rotation of the bale 1 about axis X-X, wrapping of the bale 1 is achieved with more or less overlap of successive turns of the web 3. The application of the wrapping around the bale 1 to form the wrapped bale 1a shown in Figure 2 can be carried out in known manner, and will therefore not be described in more detail herein.

Referring now to Figure 2, this shows the apparatus with the turntable 5 tilted relative to chassis 10, after completion of wrapping of the bale 1 to form a wrapped bale 1a. A film web clamping and cutting means 6 is arranged along the path of travel of the web 3 from the reel 8a to the bale 1, as can be seen in Figure 1, and upon tilting of the turntable 5, to the position shown in Figure 2, the means 6 engages with the web 3 in order to gather the web into a gathered web portion 3a. Figure 2 shows the means 6 at the moment when it first starts operating. As shown, the web 3 is formed into a gathered or compressed web portion 3a on a support 7 i.e. it forms a narrow "string" from the web 3 in the region of the clamping and cutting arrangement. It should be noted that the tilting movement of the turntable 5 is utilised to achieve this objective.

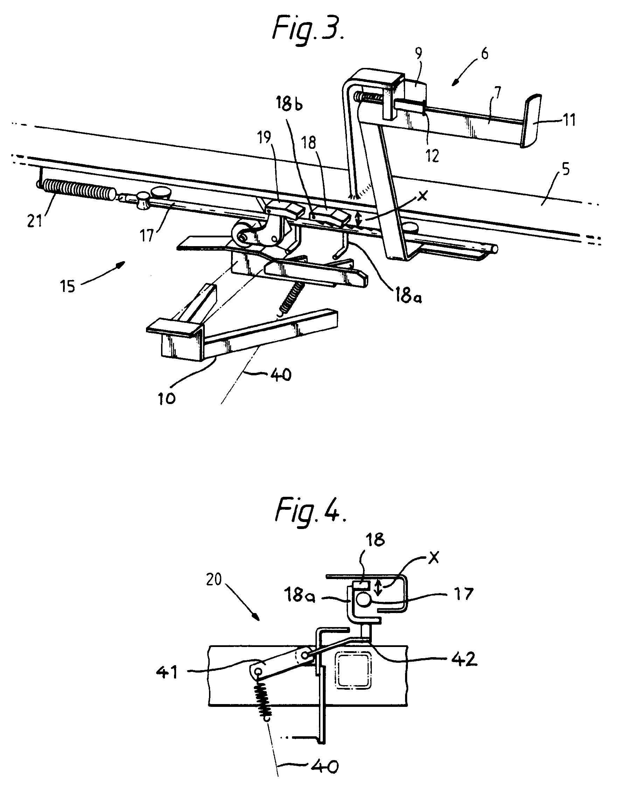

Figure 3 shows an embodiment of clamping and cutting means 6 in detailed form, which is mounted on the turntable 5. The clamping and cutting means 6 comprises a support 7 on which the film web 3 is deformed into the gathered web portion 3a, and has a film stopper 11 mounted on one end thereof. The means 6 also includes an abutment member 12 against which the gathered film web portion 3a is pressed in order to clamp the film before the cutting operations take place. The means 6 also includes a cutting tool 9 e.g. in the form of a cutting edge, which is fixedly mounted on turntable 5 in the illustrated embodiment. However, as will be described in more detail below, support 7 is movable relative to cutting tool 9 (and therefore also relative to turntable 5) in the illustrated embodiment, so that a film cutting operation can take place.

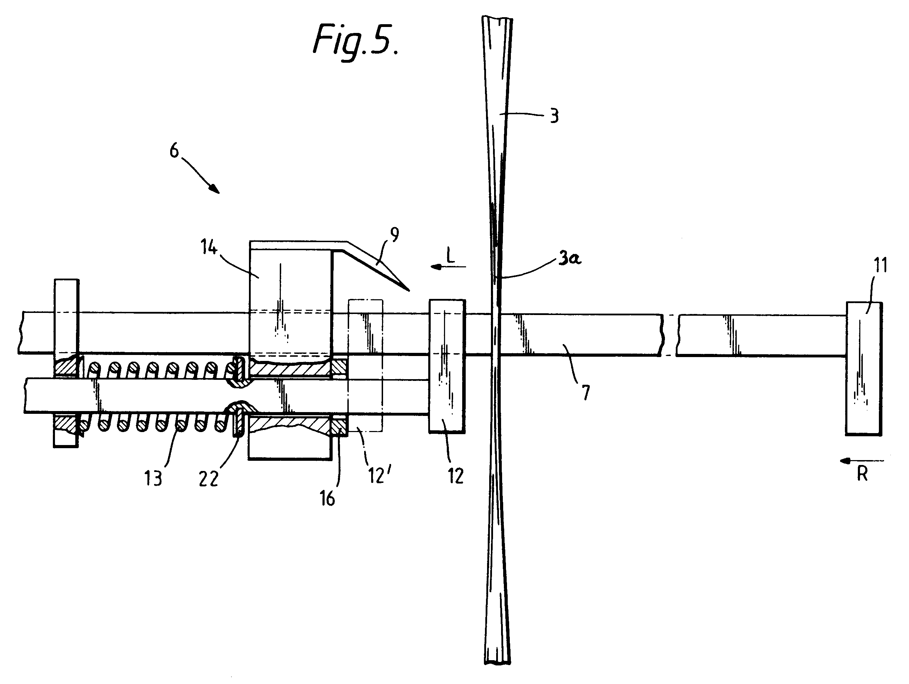

Figure 5 shows in more detail an embodiment of clamping and cutting means 6. As mentioned above, web 3 will be gathered to form gathered web portion 3a during the tilting movement of the turntable 5 to form a web "string" on the support 7. The support 7 has a sufficient lateral extent relative to the path of travel of the web 3 to ensure that the web can be caught on the support 7 during tilting movement of the turntable. However, to prevent the web from sliding off the support 7, the latter is provided with the film stopper 11 at one end thereof, as mentioned above. Once the web 3 has been collected in a string on the support 7, the cutting operation can take place. In the illustrated arrangement, the support 7 is caused to move in the direction of the arrow R, and web portion 3a is therefore also moved in the direction of the arrow R until it comes into contact with abutment 12, when it is then clamped between abutment 12 and film stopper 11. Thereafter, as shown in Figure 5, support 7, film stopper 11 and abutment 12 continue to move in the same direction together, as shown by arrow L, towards the cutting tool 9 until abutment 12 takes up the position shown in dashed outline and designated by reference 12'. During this movement, the web 3 is guided towards the cutting tool 9 and is cut immediately adjacent the side facing the cylindrical bale 1. It should be mentioned that after the cutting operation is completed, the web 3 is still firmly held between the abutment 12 and stopper 11 on the side facing the dispenser reel 8a.

Figure 4 shows a trigger mechanism 20 which, at a predetermined point of time or predetermined tilt angle after commencement of tilting of the turntable from the position shown in Figure 1, will initiate the operation of the clamping and cutting means 6. The trigger mechanism 20 may be of any suitable kind, and Figure 4 illustrates one example only of a means of achieving this. It is important, however, that trigger mechanism 20 will be activated, via a connection with chassis 10, at a predetermined point of time or tilt angle during the tilting movement of the turntable 5.

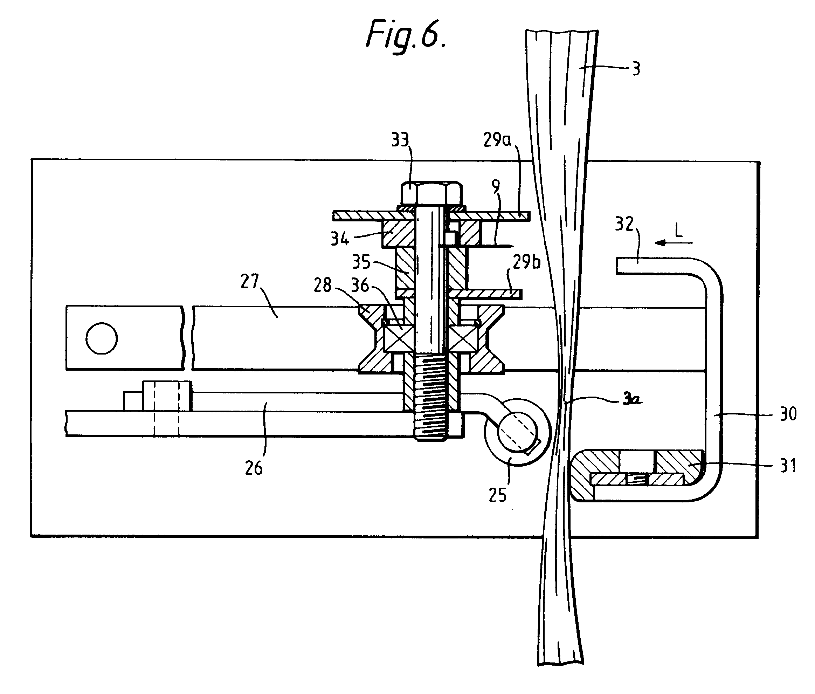

Figure 6 shows an alternative embodiment of clamping and cutting means 6. Similar to the embodiment of Figure 5, the web 3 will be collected into a gathered portion or string 3a during the tilting movement of the turntable 5, by being formed on a film support 27. Support 27 has a sufficient length to ensure that the web will be caught on the support during the tilting movement of the turntable. At one end of the support 27 a film stopper 30 is provided. A rubber or similar pad of friction material 31 is replacably mounted on the stopper 30, and which co-operates with a holding portion 32 of the stopper 30. The support 27 is longitudinally displaceable in the direction of the arrow L towards a friction roller 25 and a fixed cutting edge forming cutting tool 9, support 27 being guided between opposing guide rollers 28 (only the upper one of which is shown in Figure 6), which are mounted on respective bearings 36. The friction roller 25 is mounted on a resilient bar 26, which enables the roller 25 to move resiliently in a direction transversely of the direction of movement of the support 27 as the pad 31 engages the roller 25. The web 3 will be entrapped and retained between roller 25 and the pad 31 simultaneously with the holding portion 32 pushing the web against the cutting tool 9 as the web 3 is stretched between holding surfaces 29a and 29b which are held in assembly with cutting tool 9 by means of a bolt 33. Bolt 33 therefore serves to attach the cutting and clamping means 6 to the turntable 5. Cutting tool edge 9 is replaceably mounted between two spacer blocks 34 and 35 on the bolt 33. The operation of the clamping and cutting means is similar to that described above for the embodiment of Figure 5.

Referring now to Figure 3, it can be seen that the apparatus also includes a winding mechanism 15, which can operate to pre-tension the clamping and cutting means 6 against a spring force 21, before a subsequent clamping and cutting operation can be carried out on a newly wrapped bale. The winding mechanism 15 can be constructed and operated in a number of different ways. The particular mechanism 15 shown in Figure 3 is by way of example only. Mechanism 15 comprises a rack rail 17, a locking pawl 18, and a driving pawl 19. Each complete revolution of the turntable 5 about its vertical axis Y-Y causes driving pawl 19 to push the rail 17 one step in a direction to pre-tension support 7 and stopper 11 against the action of spring 21. The number of pre-tensioning steps may, if desired, be adapted to the number of revolutions of the turntable 5, so that the mechanism 15 will be fully wound-up at the latest when a bale 1 has been completely wrapped.

To illustrate the automatic application of pre-stretched plastics film onto the next bale to be wrapped, reference should be made again to Figure 5. Film web 3 is kept in a clamped state between abutment 12 in position 12' and film stopper 11 after the cutting operation has been completed. With the web firmly held in this manner, turntable 5 is turned about its vertical axis which causes the film to be pulled or wrapped a first time around the newly placed bale 1 on the platform. This occurs with the turntable 5 in the substantially horizontal position shown in Figure 1. After slightly more than one revolution of the turntable 5, so that web 3 overlaps and holds the leading end of the web, the winding mechanism 15 pre-tensions the clamping and cutting means 6, and after a predetermined number of stepped movements of the rail 17, the film stopper 11 moves away from the abutment 12, and thereby releases the web 3.

As shown in Figure 5. a damping means 16 e.g. in the form of a rubber pad, is provided between the abutment member 12 and a holder 14. A spring 13 presses against a spring washer 22 which is secured to an extension of the abutment 12 in order to apply a tensioning force on the abutment 12 in a direction opposite to direction L. As will be apparent from Figure 5, web 3 will not be released until the stopper 11 and abutment 12 have returned to their original positions shown in full lines. By adapting this function with that of the winding mechanism 15, it is possible to predetermine the release of the cut end of the film 3 by adapting a number of steps to the number of revolutions of the turntable 5.

It should be appreciated that the initiation of the operation of the clamping and cutting means, and its subsequent operations, are derived solely by means of the motion and operations already present in a rotating turntable type of bale wrapper. In particular, the tilting movement of the turntable 5, as well as its rotation about its vertical axis are utilised. Consequently, it is not necessary to provide the bale wrapper apparatus with specially designed hydraulic or electric equipment which would have to be added to the turntable 5 and would thereby make it more complicated and expensive. In order to protect dangerous portions of the apparatus, it will be provided with various protecting means and covers (not shown).

The bale wrapper apparatus may also be provided with additional equipment in the form of electronic sensors to record the number of revolutions of the bale. This may be suitable if a certain number of revolutions of the turntable is required.

Referring again to the detailed construction shown in Figures 3 and 4, the release of the locking pawl 18 by the trigger mechanism 20 is illustrated. The locking pawl 20 can be rotated about a hinge point 18b by an actuator limb 18a which can cause the pawl 18 to move up or down as shown by the arrow X in Figures 3 and 4. The limb 18a can be raised by an arm 42 (see Figure 4) which can contact the underside of limb 18a, but which is not connected directly thereto.

The triggering mechanism 20 is connected to the chassis 10 via a rope or line 40 which, at a predetermined tilt angle of the turntable 5 is tensioned and thereby actuates a lever 41 which in turn raises the locking pawl 18 from the rail 17 via arm 42 and limb 18a.

Accordingly, the embodiments of bale wrapper apparatus according to the invention disclosed herein provide a film web clamping and cutting means 6 which is arranged along the path of travel of the web 3 from the reel 8a to the bale 1 and which is engageable with the web 3 during tilting of the turntable to the discharge position in order to gather the web into a gathered web portion or string 3a. Further, means (40, 41, 42, 17, 18) is provided to initiate the operation of the cutting and clamping means 6 at a predetermined time or tilting angle during the tilting movement of the turntable 5, in order that the means 6 can cut the gathered film web portion or string 3a between the reel 8a and the wrapped bale 1a and also can hold the cut end of the web, and so that the wrapped bale 1a can then be discharged from the turntable 5. Furthermore, the clamping and cutting operations are derived solely by the effect of tilting of the turntable 5 and its rotation about its vertical axis, and preferably the release of the held cut end of the web is derived from the same motion energy of the turntable during the initial stage of wrapping of a newly positioned bale on the turntable.

## Claims

1. A bale wrapper apparatus which comprises a chassis (10), a turntable (5) which is rotatably mounted on the chassis (10) for rotation about a substantially vertical axis (Y-Y) and which has a pair of laterally spaced rollers (4) arranged to receive a bale (1) and operable to rotate the bale about a substantially horizontal axis, (X-X) simultaneously with the rotation of the turntable (5) about its axis (Y-Y), a fixed mounting (8) on the chassis (10) which is spaced from the turntable (5), and which serves to mount a dispenser reel (8a) of stretchable plastics film from which a film web (3) can be withdrawn in order to apply wrapping around the bale when the bale is rotated about its axis (X-X) and the turntable is rotated about its axis (Y-Y), and means for tilting the turntable (5) about a substantially horizontal axis (5a), from a substantially horizontal bale-wrapping position to a tilted position in order to discharge the wrapped bale (1a) from the turntable ; characterised in that a film web clamping and cutting means (6) is arranged along the path of travel of the web (3) from the reel (8a) to the bale (1) and is engageable with the web (3) during tilting of the turntable to the discharge position, in order to gather the web into a gathered web portion (3a), and in that means (40, 41, 42, 17, 18) is provided to initiate the operation of the clamping and cutting means (6) at a predetermined time or tilting angle during the tilting movement of the turntable, in order that the clamping and cutting means (6) can cut the gathered film web portion (3a) between the reel (8a) and the wrapped bale (1a) and also can hold the cut end of the web, so that the wrapped bale (1a) can then be discharged from the turntable (5).

2. A bale wrapper apparatus according to Claim 1, characterised in that the clamping and cutting means (6) comprises a support (7) on which the gathered portion (3a) of the web is formed, and a cutting tool (9) for cutting the gathered portion (3a), said support (7) and said cutting tool (9) being movable relative to each other in order that the film cutting operation can be carried out.

3. A bale wrapper apparatus according to Claim 2. characterised in that the cutting tool (9) is fixed to the turntable (5), and the support (7) is movable towards the cutting tool (9) and has a film stopper (11) which can move the gathered web portion (3a) into engagement with the cutting tool (9).

4. A bale wrapper apparatus according to Claim 1, characterised in that the clamping and cutting means (6) comprises a resilient friction roller (25) and a friction pad (21) which are movable relative to each other in order to clamp the gathered web portion (3a) prior to cutting of the gathered web portion.

5. A bale wrapper apparatus according to Claim 3, characterised in that the clamping and cutting means (6) includes an abutment (12) against which the gathered web portion (3a) is pressed by the film stopper (11) in order to clamp the gathered web portion (3a), prior to cutting of the film by the cutting tool (9).

6. A bale wrapper apparatus according to Claim 5, characterised in that the abutment (12) is movable with the film stopper (11) against the force of the spring (13) through a predetermined distance when the film stopper (11) moves towards the cutting tool (9).

7. A bale wrapper apparatus according to any one of Claims 1 to 6, characterised by a trigger mechanism (20) connected to the chassis (10), and arranged to initiate the operation of the clamping and cutting means (6) during the tilting movement of the turntable (5).

8. A bale wrapper apparatus according to Claim 7, characterised by a winding mechanism (15) arranged to pretension the clamping and cutting means (6) against spring force (21), prior to the next operation of the trigger mechanism (20).

9. A bale wrapper apparatus according to Claim 8, characterised in that the winding mechanism (15) is arranged to apply step-wise pre-tensioning of the clamping and cutting means (6) with each revolution of the turntable (5).

10. A bale wrapper apparatus according to Claim 9, characterised in that the winding mechanism (15) is arranged to permit release of the cut and gathered web portion (3a) by the clamping and cutting means (6), at the earliest after the first pre-tensioning step.

**Patentansprüche**

1. Ballenumwickelvorrichtung mit einem Grundrahmen (10), einem Drehtisch (5), der zur Drehung um eine im wesentlichen vertikale Achse (Y-Y) drehbar am Grundrahmen (10) befestigt ist und ein Paar seitlich im Abstand angeordnete Rollen (4) zur Aufnahme eines Ballens (1) aufweist sowie zur Drehung des Ballens um eine im wesentlichen horizontale Achse (X-X) gleichzeitig mit der Drehung des Drehtisches (5) um seine Achse (Y-Y) betätigbar ist, einer festen Halterung (8) am Grundrahmen (10), die sich im Abstand vom Drehtisch (5) befindet und zur Halterung einer Vorratsrolle (8a) aus streckbarer Kunststoff-Folie dient, von der eine Folienbahn (3) zur Aufbringung einer Umwicklung um den Ballen bei dessen Drehung um seine Achse (X-X) und der Drehung des Drehtisches um seine Achse (Y-Y) abgezogen werden kann, und Mitteln zum Kippen des Drehtisches (5) um eine im wesentlichen horizontale Achse (5a) aus einer im wesentlichen horizontalen Ballenwickelstellung in eine gekippte Stellung, um den umwickelten Ballen (1a) vom Drehtisch abzugeben : **dadurch gekennzeichnet**, daß entlang der Bewegungsbahn der Bahn (3) von der Vorratsrolle (8a) zum Ballen (1) Folienbahn-Klemm- und Schneidmittel (6) angeordnet und während des Kippens des Drehtisches in die Abgabestellung in Eingriff mit der Bahn (3) bringbar sind, um die Bahn zu einem zusammengefaßten Bahnbereich (3a) zusammenzufassen, und daß Mittel (40, 41, 42, 17, 18) vorgesehen sind, um den Betrieb der Klemm- und Schneidmittel (6) zu einer vorbestimmten Zeit oder bei einem vorbestimmten Kippwinkel während der Kippbewegung des Drehtisches zu beginnen, so daß die Klemmund Schneidmitel (6) den zusammengefaßten Folienbahnbereich (3a) zwischen der Vorratsrolle (8a) und dem umwickelten Ballen (1a) schneiden und außerdem das geschnittene Ende der Bahn halten können, so daß dann der umwickelte Ballen (1a) vom Drehtisch (5) abgegeben werden kann.

2. Ballenumwickelvorrichtung nach Anspruch 1, **dadurch gekennzeichnet,** daß die Klemm- und Schneidmittel (6) eine Aufnahme (7), auf der der zusammengefaßte Bereich (3a) der Bahn gebildet wird, und ein Schneidwerkzeug (9) zum Schneiden des zusammengefaßten Bereiches (3a) aufweisen, wobei die Halterung (7) und das Schneidwerkzeug (9) relativ zueinander bewegbar sind, damit der Folienschneidvorgang ausgeführt werden kann.

3. Ballenumwickelvorrichtung nach Anspruch 2, **dadurch gekennzeichnet,** daß das Schneidwerkzeug (9) fest am Drehtisch (5) angebracht ist und die Halterung (7) auf das Schneidwerkzeug (9) zu bewegbar ist und einen Bahnanschlag (11) aufweist, der den zusammengefaßten Bahnbereich (3a) in Eingriff mit dem Schneidwerkzeug (9) bewegen kann.

4. Ballenumwickelvorrichtung nach Anspruch 1, **dadurch gekennzeichnet,** daß die Klemm- und Schneidmittel (6) eine elastische Reibrolle (25) und einen Reibpuffer (21) aufweisen, die relativ zueinander bewegbar sind, um den zusammengefaßten Bahnbereich (3a) vor dem Durchschneiden festzuklemmen.

5. Ballenumwickelvorrichtung nach Anspruch 3, **dadurch gekennzeichnet,** daß die Klemm- und Schneidmitel (6) eine Anlage (12) aufweisen, gegen die der zusammengefaßte Bahnbereich (3a) vom Bahnanschlag (11) gepreßt wird, um den zusammengefaßten Bahnbereich (3a) vor dem Schneiden der Folie durch das Schneidwerkzeug (9) festzuklemmen.

6. Ballenumwickelvorrichutng nach Anspruch 5, **dadurch gekennzeichnet,** daß die Anlage (12) mit dem Bahnanschlag (11) gegen die Kraft der Feder (13) eine vorbestimmte Strecke bewegt werden kann, wenn sich der Bahnanschlag (11) auf das Schneidwerkzeug (9) zu bewegt.

7. Ballenumwickelvorrichtung nach einem der Ansprüche 1 bis 6, **gekennzeichnet durch** einen Triggermechanismus (20), der mit dem Grundrahmen (10) verbunden und so angeordnet ist, daß er während der Kippbewegung des Drehtisches (5) den Betrieb der Klemm- und Schneidmitel (6) auslöst.

8. Ballenumwickelvorrichtung nach Anspruch 7, **gekennzeichnet durch** einen Wickelmechanismus (15) zum Vorspannen der Klemm- und Schneidmittel (6) vor der nächsten Aktion des Triggermechanismus (20) und gegen Federkraft (21).

9. Ballenumwickelvorrichtung nach Anspruch 8, **dadurch gekennzeichnet,** daß der Wickelmechanismus (15) bei jeder Umdrehung des Drehtisches (5) eine schrittweise Vorspannung der Klemm- und Schneidmittel (6) ausübt.

10. Ballenumwickelvorrichtung nach Anspruch 9, **dadurch gekennzeichnet,** daß der Wickelmechanismus (15) so angeordnet ist, daß er die Freigabe des geschnittenen und zusammengefaßten Bahnbereiches (3a) durch die Klemm- und Schneidmittel (6) frühestens nach dem ersten Vorspannschritt ermöglicht.

## Revendications

1. Appareil d'emballage de balles, qui comprend un châssis (10), une table ou plateau rotatif (5) monté rotatif sur le châssis (10) afin de tourner autour d'un axe à peu près vertical (Y-Y) et qui comporte deux rouleaux (4) espacés latéralement, agencés pour recevoir une balle (1) et pour faire tourner cette dernière autour d'un axe à peu près horizontal (X-X) simultanément avec la rotation du plateau (5) autour de son axe (Y-Y) ; un support fixe (8) sur le châssis (10), qui est espacé du plateau rotatif (5) et qui sert à monter un rouleau distributeur (8a) d'une pellicule de matière plastique étirable, à partir duquel peut être tirée une bande (3) de pellicule pour appliquer un emballage autour de la balle lorsque cette dernière tourne autour de son axe X-X et que le plateau tourne autour de son axe (Y-Y) ; et des moyens pour faire basculer le plateau rotatif (5) autour d'un axe à peu près horizontal (5a), depuis une position à peu près horizontale d'emballage jusque dans une position basculée afin de décharger une balle emballée (1a) du plateau rotatif (5) :
caractérisé en ce qu'un dispositif (6) de serrage et de coupe de bande de pellicule est disposé le long du trajet de déplacement de la bande (3) depuis le rouleau (8a) jusqu'à la balle (1) et est apte à venir en contact avec la bande (3) lors du basculement du plateau rotatif dans la position de décharge, afin de rassembler la bande en une portion rassemblée (3a), et en ce qu'il est prévu un dispositif (40, 41, 42, 17, 18) pour démarrer le fonctionnement du dispositif de serrage et de coupe (6) à un instant prédéterminé, ou à un angle de basculement prédéterminé, lors du mouvement de basculement du plateau rotatif, afin que le dispositif de serrage et de coupe (6) puisse couper la portion (3a) de bande de pellicule rassemblée entre le rouleau (8a) et la balle emballée (1a) et puisse également maintenir l'extrémité coupée de la bande, afin que la balle emballée (1a) puisse alors être déchargée du plateau rotatif (5).

2. Appareil d'emballage de balles suivant la revendication 1, caractérisée en ce que le dispositif de serrage et de coupe (6) comprend un support (7) sur lequel est formée la portion (3a) de bande rassemblée, et un outil de coupe (9) pour couper ladite portion rassemblée (3a), ledit support (7) et ledit outil de coupe (9) étant mobiles l'un par rapport à l'autre afin que l'opération de coupe de la pellicule puisse être exécutée.

3. Appareil d'emballage de balles suivant la revendication 2, caractérisé en ce que l'outil de coupe (9) est fixé sur le plateau rotatif (5), et le support (7) est mobile vers l'outil de coupe (9) et comporte un organe d'arrêt (11) de la pellicule, qui peut déplacer la portion de bande rassemblée (3a) en contact avec l'outil de coupe (9).

4. Appareil d'emballage de balles suivant la revendication 1, caractérisé en ce que le dispositif de serrage et de coupe (6) comprend : un galet élastique de friction (25) et un patin de friction (21) qui sont mobiles l'un par rapport à l'autre afin de serrer la portion de bande rassemblée (3a) avant la coupe de ladite portion.

5. Appareil d'emballage de balles suivant la revendication 3, caractérisé en ce que le dispositif de serrage et de coupe (6) comprend une butée (12) contre laquelle la portion (3a) de la bande rassemblée est pressée par l'organe d'arrêt (11) de la pellicule, afin de serrer la portion de la bande rassemblée (3a) avant la coupe de la pellicule par l'outil de coupe (9).

6. Appareil d'emballage de balles suivant la revendication 5, caractérisé en ce que la butée (12) est mobile avec l'organe d'arrêt (11) de la pellicule à l'encontre de la force du ressort (13), sur une distance prédéterminée lorsque l'organe d'arrêt (11) de la pellicule se déplace vers l'outil de coupe (9).

7. Appareil d'emballage de balles suivant l'une quelconque des revendication 1 à 6, caractérisé en ce qu'il comprend un mécanisme de déclenchement (20) qui est relié au châssis (10) et est agencé pour démarrer le fonctionnement du dispositif de serrage et de coupe (6) pendant le mouvement de basculement du plateau rotatif (5).

8. Appareil d'emballage de balles suivant la revendication (7), caractérisé en ce qu'il comprend un mécanisme d'enroulement (15) agencé pour appliquer une tension préalable sur le dispositif de serrage et de coupe (6) à l'encontre de la force d'un ressort (21), avant l'opération suivante du mécanisme de déclenchement (20).

9. Appareil d'emballage de balles suivant la revendication 8, caractérisé en ce que le mécanisme d'enroulement (15) est agencé pour appliquer la tension préalable du dispositif de serrage et de coupe (6) pas à pas avec chaque révolution du plateau rotatif (5).

10. Appareil d'emballage de balles suivant la revendication (9), caractérisé en ce que le mécanisme d'enroulement (15) est agencé pour permettre la libération de la portion (3a) de bande coupée et rassemblée, par le dispositif de serrage et de coupe (6), au plus tôt après le premier pas de tension préalable.

Fig.1.

# Fig.2.

Fig.3.

Fig.4.

*Fig.5.*

EP 0 367 529 B1

*Fig.6.*

EP 0 367 529 B1